# EUROPÄISCHE PATENTSCHRIFT

(11) **EP 1 114 475 B1**
(45) Veröffentlichungstag und Bekanntmachung des Hinweises auf die Patenterteilung: **31.07.2002**
(21) Anmeldenummer: 99953689.9
(22) Anmeldetag: 02.09.1999
(51) Int. Cl.: H01M 2/00

(54) **GASDIFFUSIONSSTRUKTUR SENKRECHT ZUR MEMBRAN VON POLYMERELEKTROLYT-MEMBRAN BRENNSTOFFZELLEN**
GAS DIFFUSION STRUCTURE PERPENDICULAR TO THE MEMBRANE OF POLYMER-ELECTROLYTE MEMBRANE FUEL CELLS
STRUCTURE DE DIFFUSION DE GAZ PERPENDICULAIRE A LA MEMBRANE DE PILES A COMBUSTIBLE A MEMBRANE ELECTROLYTIQUE POLYMERE

(30) Priorität: 04.09.1998 DE 19840517
(43) Veröffentlichungstag der Anmeldung: 11.07.2001
(73) Patentinhaber: Manhattan Scientifics, Inc., New York, NY 10022 (US)
(72) Erfinder: ROSENMAYER, Volker, D-83416 Saaldorf-Surheim (DE)
(74) Vertreter: Riederer Freiherr von Paar zu Schönau, Anton
(86) Internationale Anmeldenummer: DE9902776
(87) Internationale Veröffentlichungsnummer: WO0014816

(56) Entgegenhaltungen:
- EP-A- 0 560 295
- WO-A-97/13287
- WO-A-97/20359
- WO-A-98/39809
- US-A- 4 804 592
- US-A- 5 620 807
- US-A- 5 641 586

## Beschreibung

Die vorliegende Erfindung bezieht sich auf eine Polymerelektrolyt-Brennstoffzelle mit Polymerelektrolytmembran-Brennstoffzelle mit einer Schichtung aus einer solchen Membran, einer einen Katalysator enthaltenden Elektrode, einer porösen, elektrisch leitfähigen Gasdiffusionsschicht und einer Stromableiterplatte mit einer Gasverteil-Kanalstruktur, sowie mit einem zumindest in einem Teilbereich vorhandenen Gradienten der durch die Porosität gegebenen Gasdurchlässigkeit in der Schichtung in einer Richtung senkrecht zur Membran mit höherer Gasdurchlässigkeit näher an der Membran und niedrigerer Gasdurchlässigkeit näher an der Stromableiterplatte, wobei im Betrieb an der Membran durch eine Wasserstoff-Sauerstoff-Reaktion Wasser und Wärme produziert werden. Die Erfindung bezieht sich weiterhin auf ein Verfahren zu ihrer Herstellung.

Die Polymerelektrolytmembran-Brennstoffzelle oder PEM-Brennstoffzelle wird mit den Reaktionsgasen Wasserstoff und Sauerstoff oder Luft betrieben. Sie besteht gemäß einem bekannten Aufbau (EP 0 560 295 A) von außen nach innen angeordnet aus zwei Stromableiterplatten mit Gasdiffusionsschichten, zwei den Katalysator enthaltenden Elektroden und einer lonenaustauschermembran, die zwischen den Elektroden liegt und mit diesen die Membran-Elektroden-Einheit bildet (im folgenden MEA - Membrane Electrode Assembly). Die Stromableiterplatten enthalten typischerweise zur MEA parallel verlaufende Einrichtungen zur Zuführung und Verteilung der Reaktanden über die gesamte Zellfläche. Da die elektrische Spannung einer einzeinen Zelle für praktische Anwendungen viel zu niedrig ist, müssen eine Mehrzahl solcher Zellen in Reihe geschaltet werden. Bei dem sich daraus ergebenden Brennstoffzellenstapel bzw. -stack werden die a ufeinandertreffenden Stromableiterplatten durch sog. Bipolarplatten ersetzt, deren Funktion in der Stromdurchleitung durch den Stack und der Trennung der Reaktionsgase liegt.

Durch Zuführung von Wasserstoff als typisches Reaktionsgas an die Brennstoffzellen-Anodenseite, welche sich in einem gegen die Umgebung abgedichteten Gasraum befindet, werden in der Anodenkatalysatorschicht Kationen erzeugt, die durch die lonenaustauschermembran diffundieren. Gleichzeitig werden die ebenfalls erzeugten Elektronen durch einen äußeren Stromkreis mit Lastwiderstand von der Anode zur Kathode geführt. Das zugeführte Oxidationsmittel Sauerstoff, wobei bevorzugt die Sauerstoffkonzentration in der Luft genügt, wird nun in der Kathode durch Aufnahme der Wasserstoffionen und Elektronen reduziert. Als Reaktionsprodukt entsteht Wasser Die Reaktionsenthalpie wird in Form von elektrischer Energie und Abwärme frei.

Ein wesentliches Problem dabei ist der Wasserhaushalt der Brennstoffzelle. Bei der eingangs genannten bekannten Brennstoffzelle (EP 0 560 295 A) wird der Wasserhaushalt speziell in der den Katalysator enthaltenden Elektrodenschicht beeinflußt, und zwar mit Hilfe hydrophober Überzüge über dem mit dem Katalysator belegten Katalysatorträger. Damit der Katalysator trotzdem mit den Reaktanden in Kontakt kommt, wird in dieser Schicht die Porosität zur Membran zu größer. Die Membran arbeitet andererseits nur dann unter optimalen Bedingungen, d. h. sie leitet die Wasserstoffionen optimal, wenn sie ausreichend Feuchtigkeit enthält. Sinkt ihr Feuchtigkeitsgehalt zu stark ab, steigt der Innenwiderstand der Zelle aufgrund des erhöhten Membranwiderstandes beträchtlich an, wodurch die Leistung sinkt. Zum optimalen Zellbetrieb bedarf es daher bei gegebener Temperatur an jeder Stelle der Membran einer Luftfeuchtigkeit von nahezu 100 Prozent strömt das Kathodengas Luft durch die Verteilerkanäle der Stromableiterplatten und diffundiert durch die Gasdiffusionsschicht, hat es beim Eintritt in den Gasraum einen niedrigen Partialdruck an Wasserdampf, beim Austritt einen hohen, da Sauerstoff an der Kathode zu Wasser reagiert. Der durch die Wasserstoffpartialdruckdifferenzen zwischen Membranoberfläche und Verteilerkanal hervorgerufene Diffusionsstrom trocknet die Membran am Einlaß des Kathodengases aus, am Auslaß entstehen dagegen möglicherweise Wasserablagerungen in der Diffusionsschicht Bei gegebener Betriebstemperatur bedarf es demnach zum Ausgleich der Wasserbilanz der Membran einer über die Membranoberfläche möglichst konstanten Zusammensetzung des Kathodengases und auch des Anodengases.

Dieses Problem wird herkömmlich nur teilweise durch externe Befeuchtungssysteme, teils kombiniert mit dem Kühlsystem, gelöst, die unter zumindest intervallweiser Messung der Membranfeuchte die Wasserbilanz der Zelle ausgleichen. Nachteilig an diesen Befeuchtungssystemen sind die zusätzliche Belastung des Brennstoffzellensystems mit Eigenenergieverbrauch, ein erhöhtes Gewicht, was vor allem für die Anwendung in kleinen, portablen Systemen nicht wünschenswert ist, und zusätzliche Kosten, welche die Wettbewerbsfähigkeit der Brennstoffzelle mit herkömmlichen Energieversorgungssystemen schwächen. Des weiteren bleibt noch immer obiges Problem der gleichmäßigen Gasverteilung an der Oberfläche des Katalysators und der Zellmembran. Ziel ist es, eine Brennstoffzelle ohne Befeuchtung der Reaktionsgase zu betreiben.

Elektroden-Katalysator-Schichten, die porös sind und somit eine gewisse Gasdiffusion ermöglichen, sind auch aus der WO 97/20359 bekannt. Diese Schichten können auch mehrlagig aufgebaut sein und können durch ein leitendes Gitternetz verstärkt sein. Sie haben jedoch keinen Gradienten der Gasdurchlässigkeit.

Eine Lösung der Problematik einer gleichmäßigen Verteilung der Reaktionsgase zeigt die US-PS 5,641,586. Zwischen der Elektrodenkatalysatorschicht und der Stromableiterplatte werden zwei Schichten angeordnet; an die MEA angrenzend eine microporöse, hydrophobe Gasdiffusionsschicht und angrenzend an die Stromableiterplatte ein macroporöses, hydrophiles Flow Field. Das Flow Field besitzt zwei ineinandergreifende Kanalstrukturen einerseits zur Verteilung der Reaktionsgase an den Gasdiffusionsschichten, andererseits zum Abtransport der Reaktionsprodukte. Zwar können so die Reaktanden gleichmäßig über die Oberfläche der Membran verteilt werden, auch wird eine Wasserablagerung durch die Hydrophobierung vermieden, aber es besteht nach wie vor die Gefahr der Austrocknung, da die Gasdiffusionsschicht einen Austritt des Reaktionsproduktes auch bei Unterversorgung der Membran mit Feuchtigkeit nicht verhindert.

Eine Möglichkeit, den Wasserhaushalt einer Brennstoffzelle auf konstantem, optimalen Niveau zu halten, zeigt die DE-OS 14 96 172, wobei eine Wasserstoff-Diffusionselektrode aus einer Palladium/Gold-Legierung verwendet wird, die wasserstoffdurchlässig ist, aber den Durchtritt von Flüssigkeiten verhindert. Allerdings eignet sich diese Bauart nicht für die Anwendung an der Kathode, die vorwiegend das Problem des Ausgleichs der Wasserbilanz aufweist, da diese Elektrode für Sauerstoff undurchlässig ist.

Der Erfindung liegt daher die Aufgabe zugrunde, die herkömmliche Gasdiffusionsschicht der PEM-Brennstoffzellen durch eine Gasdiffusionsstruktur zu ersetzen, deren Diffusionseigenschaff so bemessen ist, daß die Wasserbilanz an der MEA immer ausgeglichen ist.

Die entsprechende Brennstoffzelle soll durch ein einfaches, kostengünstiges Verfahren zur Herstellung dieser Gasdiffusionsstruktur herstellbar sein.

Diese Aufgaben werden erfindungsgemäß gelöst durch eine Gasdiffusionsstruktur, welche dadurch gekennzeichnet ist, daß der Gradient in der Gasdurchlässigkeit in der an die den Katalysator enthaltenden Elektrode angrenzenden Gasdiffusionsschicht vorhanden ist, und zwar zumindest in diesem Teilbereich der Gasdiffusionsschicht die Gasdurchlässigkeit näher an der Stromableiterplatte um soviel geringer ist als in der Nähe der Membran, daß eine über die Oberfläche der Membran näherungsweise konstante Gaszusammensetzung auftritt und das dampfförmig entstandene Wasser bei der Betriebstemperatur durch die Gasdiffusionsschicht hindurch einen solchen Wasserdampfdiffusionsstrom erzeugt, daß der für die Leitfähigkeit optimale Feuchtigkeitsgehalt der Membran im wesentlichen erhalten bleibt sowie durch ein Verfahren zur Herstellung der Gasdiffusionsstruktur, das dadurch gekennzeichnet ist, daß man die Gasdiffusionsschicht mit in Richtung auf die Membran zu zunehmender Gasdurchlässigkeit herstellt Der Gradient ist also in der Gasdiffusionsschicht vorhanden, die zum Zweck der Gasdiffusion eine gewisse Dicke aufweisen muß und bei der sich die Entstehung des Wassers nur jenseits der dem Katalysator zugewandten Grenzfläche abspielt Der Wasserdampf diffundiert in dosiertem Dampfstrom aus dem Innenbereich der Zelle heraus, und zwar so, daß an der gesamten Membran etwa gleiche Gaszufuhr- und Feuchtigkeitsverhältnisse vorliegen, die auf ein Optimum eingestellt werden können.

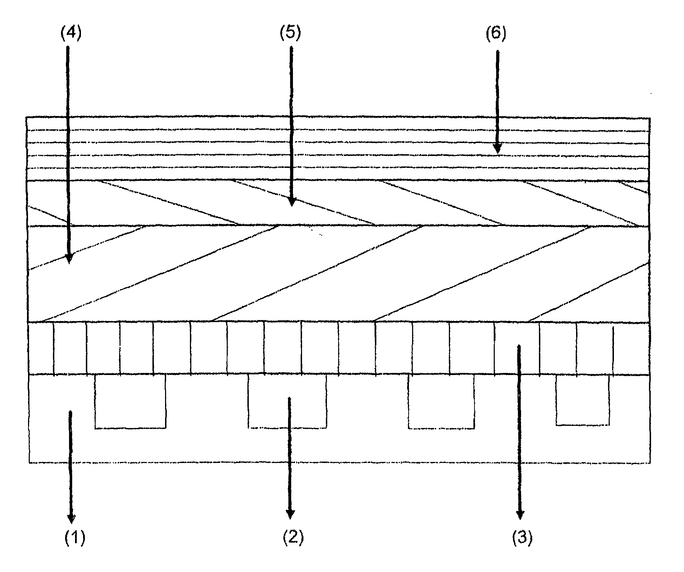

Die Zeichnung zeigt eine erfindungsgemäße Gasdiffusionsstruktur in ihrer bevorzugten Ausführungsform gemäß den Beispielen.

Die dargestellte Brennstoffzelle weist eine Stromableiterplatte 1 mit Kanälen 2 zum Verteilen der Reaktionsgase, eine äußere Schicht 3 und eine innere Schicht 4 einer Gasdiffusionsstruktur, eine Elektrode 5 mit einer Katalysatorschicht und eine Polymerelektrolytmembran 6 auf, auf deren gegenüberliegender Seite sich nicht dargestellte kathodische Strukturelemente anschließen.

Die Gasdiffusionstruktur 3, 4 besteht allgemein aus porösen, elektrisch leitfähigen Materialien und ist eine orthogonale Struktur welche zur Erreichung eines Gradienten in der Gasdurchlässigkeit in ihrem Porenvolumen angepaßt werden muß. Dies kann schichtweise oder kontinuierlich erfolgen Eine nahezu kontinuierliche Änderung könnte erreicht werden, wenn sehr viele, sehr dünne Schichten mit jeweils etwas unterschiedlichen Diffusionseigenschaften aneinandergefügt werden, mindestens und im folgenden auch bevorzugt bedarf es jedoch zweier Schichten 3, 4 mit unterschiedlicher Gasdurchlässigkeit.

Die äußere Schicht 3, d. h. der Teil der Gasdiffusionsstruktur, der an die Stromableiterplatte 1 mit den Kanälen 2 angrenzt, besitzt ein relativ kleines Porenvolumen und damit einen hohen Diffusionswiderstand, während der innere Teil 4 der Gasdiffusionsstruktur, d. h. der Teil, der mit der den Katalysator enthaltenden Elektrode 5 in Berührung ist, ein relativ hohes Porenvolumen aufweist. Die Reaktionsgase können sich daher auch auf Distanzen, die etwa in der Größenordnung der Stege der Stromableiterplatte 1 liegen (0,5 bis 5 mm), durch Diffusion ausreichend gut innerhalb der Schicht 4 verteilen. Des weiteren ist die äußeren Schicht 3 der orthogonalen Gasdiffusionsstruktur bevorzugt stärker hydrophob als die innere Schicht 4.

Diese zweischichtige Gasdiffusionsstruktur kann jedoch noch durch weitere Schichten mit jeweils unterschiedlichen Funktionen ergänzt werden. So kann es durchaus positiv sein, an die innere Schicht 4 noch eine weitere Schicht zwischen der Elektrode 5 und dieser Schicht 4 hinzuzufügen. Die Aufgabe dieser zusätzlichen Schicht ist die oberflächliche Füllung und Glättung der meist groben Poren der Schicht 4, womit ein besserer Kontakt zwischen der Gasdiffusionsstruktur und der Elektrode hergestellt werden kann. Ein Verfahren zu ihrer Herstellung ist in Beispiel 3 beschrieben.

Weiterhin kann zwischen der äußeren Schicht 3 und den Stegen der Stromableiterplatte 1 eine weitere Schicht eingefügt sein. Ihre Aufgabe ist es, den elektrischen Übergangswiderstand zur Kanalstruktur möglichst gering zu halten. Dazu könnte sie plastisch oder elastisch verformbar sein, so daß die Maßtoleranzen der Stromableiterplatten oder bei einer Anordnung in einem Brennstoffzellenstack die der Bipolarplatten ausgeglichen werden und eine Stromabnahme von der Gasdiffusionsstruktur gleichmäßig erfolgen kann.

Im folgenden soll nun die Funktionsweise dieser aus den zwei Schichten 3, 4 bestehenden Gasdiffusionsstruktur dargelegt werden. Die einstellbaren Betriebsparameter der Brennstoffzelle sind die Luftzahl bzw. die Wasserstoffstöchiometrie, der Betriebsdruck, der Wasserdampfgehalt der Reaktionsgase am Zelleintritt und die Betriebstemperatur. Letztere sollte so hoch als möglich gewählt werden, um ein kompaktes Kühlsystem mit geringem Kühlmitteldurchsatz zu ermöglichen. Das einfachste denkbare Kühlsystem besteht nur aus einem Ventilator, der eine für die Kühlung ausreichende Menge an Luft durch den Kathodenraum der Zelle oder des Stacks fördert. Der einstellbare Betriebsdruck sollte so gering als möglich gewählt werden, idealerweise sollte die Brennstoffzelle unter Umgebungsdruck betrieben werden. So können Energieverluste durch Kompressoren vermieden werden, wodurch auch eine Reduktion des Gewichts und der Kosten erfolgt.

Bei Betrieb unter diesen oder ähnlichen Bedingungen liegt der Schwerpunkt der Problematik einer ausgeglichenen Wasserbilanz nun vorwiegend nicht in der Wasserablagerung in den Poren der Gasdiffusionsstruktur, sondem in der Gefahr einer Austrocknung der Membran. Um diesem vorzubeugen, bedarf es, wie bereits geschildert, vor allem kathodenseitig einer näherungsweise konstanten Gaszusammensetzung über der gesamten Oberfläche der Membran und einer näherungsweise konstanten Gaszusammensetzung in der Kanalstruktur der Stromableiterplatte. Dies wird erreicht durch Wahl einer relativ großen Luftzahl (z. B. 8 bis 70) durch die Kanäle 2 der Stromableiterplatte 1. Die Veränderung der Gaszusammensetzung durch Entnahme von Sauerstoff und Abgabe von Wasserdampf durch die Zelle sind dann vernachlässigbar Der Diffusionswiderstand der Schicht 3 der erfindungsgemäßen Gasdiffusionsstruktur muß nun so beschaffen sein, daß der bei einer gewünschten Betriebstemperatur auftretende Gradient im Wasserdampfpartialdruck zwischen der wohlbefeuchteten Membran und dem Gas im Kathodenraum einen Wasserdampfdiffusionsstrom verursacht, der gerade das gebildete Produktwasser abführt. Die wesentlichen Sauerstoff- und Wasserdampfgradienten treten somit nicht wie üblich parallel, sondern senkrecht zur Oberfläche der Membran 6 auf. Die Betriebsbedingungen sind damit über die gesamte Membranoberfläche konstant. Die Schicht 4 hat die Aufgabe, die Gase in dem Bereich der Stege, in dem der Diffusionsstrom unterbrochen ist, gleichmäßig zu verteilen.

Wird eine relativ geringe Luftzahl gewünscht, bei der sich Änderungen in der Zusammensetzung des Kathodengases auf dem Weg durch die Zelle bemerkbar machen, so muß der Diffusionswiderstand der äußeren Schicht 3 diesen Verhältnissen angeglichen werden. Die Schicht 3 muß im Bereich des Gaseintritts mit höherem Diffusionswiderstand ausgeführt werden als im Bereich des Gasaustritts. Ebenso kann auf diese Art und Weise eine Leistungsminderung durch Unterschiede in der Betriebstemperatur innerhalb einer Zelle mittels einer Anpassung des Diffusionswiderstands vermieden werden.

Die erfindungsgemäße Gasdiffusionsstruktur kann nicht nur wie hier exemplarisch beschrieben an der Kathode vorteilhaft eingesetzt werden, sondern auch an der Anode, insbesondere bei Betrieb der Zelle mit unbefeuchtetem Wasserstoff.

Die Herstellung dieser orthogonalen Gasdiffusionsstruktur auf der katalytischen Elektrode, mit dem Gradienten in der Gasdurchlässigkeit, wird im folgenden beispielhaft beschrieben:

### Beispiel 1:

Der Gradient in der Gasdurchlässigkeit senkrecht zur Membran 6 wird durch Heißpressen einer Folie aus einem thermoplastischen Kunststoff, der die Schicht 3 bilden soll, auf ein bezüglich der Diffusionseigenschaften homogenes Kohlefaserpapier, das die Schicht 4 bilden soll, erzielt Der thermoplastische Kunststoff verteilt sich durch das Heißpressen in den Poren nahe der einen Oberfläche des Kohlefaserpapiers und verstopft diese teilweise Die elektrische Leitfähigkeit senkrecht zur Schicht geht dadurch erstaunlicherweise nicht verloren, da die Kohlefasem die Folie durchdringen und der elektrische Strom somit wieder bis zur Oberfläche gelangt.

Das Kohlefaserpapier besitzt anfangs bevorzugt ein Porenvolumen von mehr als 50 % und besonders bevorzugt mehr als 70 %. Es kann vor der Weiterverarbeitung mit Polytetrafluorethylen (PTFE) (5 bis 40 Massen-%) nach dem in Beispiel 2 geschildertem Verfahren imprägniert werden. Die Dicke des Kohlefaserpapiers beträgt bevorzugt 0,1 bis 1,5 mm und besonders bevorzugt 0,2 bis 0,4 mm.

Die Folie aus dem thermoplastischen Kunststoff besteht aus Gründen der Hydrophobizität bevorzugt aus fluorierten Kunststoffen wie z. B. den Produkten THV und FEP der Firma Dyneon. Es können aber auch konventionelle Thermoplaste wie z. B. Polypropylen eingesetzt werden. Die Dicke der Folie beträgt bevorzugt 0,01 bis 0,2 mm. Über die Dicke der Folie und die Pressbedingungen kann der Diffusionswiderstand je nach Anwendungsfall in weiten Grenzen eingestellt werden.

Die Temperatur beim Heißpressen wird bevorzugt in einem Bereich knapp unter bis knapp über dem Schmelzbereich des verwendeten Thermoplasts gewählt. Die Pressdrücke betragen bevorzugt zwischen 10 und 100 bar, besonders bevorzugt zwischen 30 und 80 bar. Die Fasem des Kohlefaserpapiers sollen nach Möglichkeit durch das Pressen nicht brechen.

Die andere Oberfläche des Kohlefaserpapiers kann mit einer Elektrode aus katalysatorhaltigem Material beschichtet werden oder direkt auf eine bereits katalysierte Membran gelegt oder gepreßt werden. Im letzteren Fall ist es jedoch von Vorteil, eine die Oberflächenrauhigkeit des Kohlefaserpapiers ausgleichende Glättungsschicht wie in Beispiel 3 beschrieben zu verwenden.

### Beispiel 2:

Die mit Kunststoff teilweise verschlossenen Poren nach Beispiel 1 können auch durch Tränken eines Kohlefaserpapiers mit suspendierten Kunststoffen, bevorzugt PTFE oder THV, hergestellt werden. Da in einem einzigen Kohlefaserpapier durch Tränken nur äußerst kompliziert ein Gradient senkrecht zur Papierfläche erzeugt werden kann, müssen zwei Kohlefaserpapiere verwendet werden, von denen das eine, das die äußere Schicht 3 bilden soll, relativ viel Kunststoff enthält und einen höheren Diffusionswiderstand ergibt, und das andere, das die innere Schicht 4 bilden soll, relativ viele offene Poren enthält. Letzteres kann dann mit einer katalysatorhaltigen Elektrodenschicht oder mit einer die Rauhigkeiten des Kohlepapiers ausgleichenden Schicht, wie in Beispiel 3 dargelegt, versehen und entsprechend auf die nicht katalysierte oder katalysierte Membran gelegt oder gepreßt werden. Für beide Kohlefaserpapiere gelten die Spezifikationen aus Beispiel 1.

Speziell für dieses Beispiel werden zwei Kohlefaserpapiere der Firma Toray (Japan) mit den Dicken 0,17 mm für die erste Schicht 3 und 0,35 mm für die zweite Schicht 4 verwendet. Das erste Papier wird durch Tränken in einer 60%igen wässrigen PTFE-Dispersion und anschließendes Trocknen bei erhöhter Temperatur teilweise mit Kunststoff gefüllt. Ein einziger Verfahrensschritt, bestehend aus Tränken und Trocknen, reicht aber im allgemeinen nicht aus, um den gewünschten Diffusionswiderstand zu erreichen. Die Wiederholung des Verfahrensschrittes bringt jedoch auch kaum zusätzliches Material in das Kohlefaserpapier ein, da der bereits eingelagerte hydrophobe Kunststoff ein erneutes Eindringen der Dispersion in die Poren größtenteils verhindert. Höhere Füllgrade können nur durch aufeinanderfolgende Vakuum- und Druckbehandlung während des imprägnierens erreicht werden. Nach dem Imprägnieren des Kohlefaserpapiers werden die verbliebenen Netzmittel aus der Dispersion thermisch zerstört. Typischerweise werden dabei Temperaturen zwischen 300° und 400° C kurzzeitig angewandt.

Die fertige Schicht ist extrem hydrophob. Sie enthält für den Anwendungsfall einer kathodenseitigen Gasdiffusionsstruktur einer bei Umgebungsdruck und 70° C Zelltemperatur mit Luftkühlung des Kathodenraums betriebenen PEM-Brennstoffzelle 45 bis 75 % Kunststoff. Die Leitfähigkeit der Schicht wird dadurch nur unwesentlich beeinflußt, da innerhalb des Kohlefaserpapiers die leitfähigen Verbindungen zwischen den Kohlefasem nicht gelöst werden. Das zweite evtl. leicht hydrophobisierte Kohlefaserpapier wird mit dem ersten verpreßt oder beim Zusammenbau der Zelle nur beigelegt.

### Beispiel 3:

Ein sehr gut elektrisch leitfähiges Schichtsystem, das einen geeigneten Gradienten im Diffusionswiderstand aufweist, kann auch durch Auftragen einer Mischung aus einem elektrisch leitfähigem Pulver und einem Binder auf ein Substrat mit geringem Diffusionswiderstand, z. B. ein Kohlefaserpapier, hergestellt werden.

Speziell in diesem Beispiel wird ein hydrophobiertes Kohlefaserpapier mit 68 % Porenvolumen und einer Dicke von 0,35 mm verwendet. Allgemein können Kohlefaserpapiere mit den Spezifikationen aus Beispiel 1 verwendet werden. Auf dieses Substrat wird eine Dispersion aus Graphitpulver, THV (Fa. Dyneon) oder PTFE (z. B. Hostaflon TF 5032) in geeigneten wässrigen Dispersionsflüssigkeiten in einem oder mehreren Sprühgängen mit Zwischentrocknung aufgesprüht. Als Dispersionsflüssigkeiten dienen wässrige Tensidlösungen oder Mischungen aus Wasser und Alkoholen. Als elektrisch leitfähiges Pulver eignet sich bevorzugt Kohlenstoffpulver und besonders bevorzugt kugelförmige Kohlenstoffpartikel wie z. B. Mesocarbon Microbeads der Firma Osaka Gas, Japan.

Bevorzugt erfolgt das Sprühen auf einem Vakuumtisch, damit überschüssige Dispersionsflüssigkeit sofort abgesaugt wird. Nach dem letzten Trocknungsvorgang werden die Kunststoffpartikel bei erhöhter Temperatur gesintert und die Netzmittel zerstört. Der Anteil an Kunststoffbinder beträgt bevorzugt 5 bis 50 % von der Trockenmasse. Die flächenspezifische Masse der Schicht liegt bevorzugt zwischen 30 und 300 g/m² und besonders bevorzugt zwischen 60 und 120 g/m². Nach dem Sintem werden das Substrat mit der aufgebrachten Schicht bei bevorzugt 5 bis 100 bar und besonders bevorzugt bei 30 bis 80 bar und erhöhter Temperatur verpreßt.

Zum Ausgleich der Rauhigkeiten des Kohlefaserpapiers auf der der Membran bzw. dem Katalysator zugewandten Seite ist es sinnvoll, eine sehr dünne Schicht aus einer Dispersion aus porösem Ruß (z. B. Vulcan XC 72 von Cabot) und polymerem Binder (z. B. PTFE) durch Sprühen evtl. auf dem Vakuumtisch aufzutragen, zu trocknen und anschließend zu sintem. Der Kunststoffanteil liegt wiederum bevorzugt zwischen 5 und 50 %. Diese Schicht kann ebenfalls mit den oben angegebenen Drücken verpreßt werden.

### Beispiel 4:

Als Variation von Beispiel 2 kann zur Imprägnierung des Kohlefaserpapiers anstatt des fluorierten Kunststoffes auch ein Gemisch aus elektrisch leitfähigen Partikeln und einem z. B. fluoriertem Kunststoff als Binder verwendet werden. Der Vorteil liegt in der etwas besseren elektrischen Leitfähigkeit der Gasdiffusionsstruktur.

Als elektrisch leitfähige Partikel eignen sich Graphit, Leitruß oder kurze Kohlefasem. Speziell in diesem Beispiel kann eine Suspension von 50 g Wasser, 16,6 g 60 %ige PTFE-Suspension und 10 g Graphit mit einer mittleren Partikelgröße von 15 µm zur Imprägnierung verwendet werden. Nach Erreichen der für den Verwendungszweck geeigneten Fesistoffmasse (z. B. 2 bis 10 mg/cm²) wird das Schichtmaterial zur Verfestigung der Struktur und zur thermischen Zersetzung von Dispersionshllfsstoffen gesintert. Der Imprägniervorgang kann mit zwischengeschalteten Trocknungsschritten mehrmals wiederholt werden.

Ist ein Gradient im Diffusionswiderstand parallel zur Schichtfläche aufgrund des speziellen Anwendungsfalls gewünscht, so kann dieser einfach durch eine unterschledllche Anzahl von Imprägnierungsvorgängen an unterschiedlichen Teilflächen erreicht werden. Bevorzugt wird in diesem Fall das Imprägnieren von Teilflächen der Diffusionselektrode durch Aufsprühen und Elndringenlassen der Suspension nach Beispiel 2 oder 4 erreicht.

Der Gradient im Diffusionswiderstand senkrecht zur Schicht kann durch Beilegen eines weiteren Kohlefaserpapiers auf der der Membran zu- oder auf der der Membran abgewandten Seite ernelcht werden.

Altematlv kann auch eine nach Beispiel 3 aufgebrachte Schicht aus hochporösem Ruß zu diesem Zweck dienen. Mögliche Auftragetechniken sind Sprühen, Rakeln, Walzen oder Siebdruck. Bevorzugt werden hierbei Feststoffbeladungen von 0,4 mg/cm² bis 3,5 mg/cm² verwendet.

### Bezugszeichenliste

- 1: Stromableiterplatte
- 2: Kanäle zum Verteilen der Reaktionsgase
- 3: Äußere Schicht der orthogonalen Gasdiffusionsstruktur
- 4: Innere Schicht der orthogonalen Gasdiffusionsstruktur
- 5: Katalysatoren enthaltende Elektrode
- 6: Polymerelektrolytmembran

## Patentansprüche

1. Polymerelektrolykmembran-Brennstoffzelle mit einer Schichtung aus einer solchen Membran (6), einer einen Katalysator enthaltenden Elektrode (5), einer porösen, elektrisch leitfähigen Gasdiffusionsschicht (3, 4) und einer Stromableiterplatte (1) mit einer Gasverteil-Kanalstruktur (2), sowie mit einem zumindest in einem Teilbereich vorhandenen Gradienten der durch die Porosität gegebenen Gasdurchlässigkeit in der Schichtung in einer Richtung senkrecht zur Membran mit höherer Gasdurchlässigkeit näher an der Membran (6) und niedrigerer Gasdurchlässigkeit näher an der Stromableiterplatte (1), wobei im Betrieb an der Membran durch eine Wasserstoff-Sauerstoff-Reaktion Wasser und Wärme produziert werden, **dadurch gekennzeichnet, daß** der Gradient in der Gasdurchlässigkeit in der an die den Katalysator enthaltenden Elektrode (5) angrenzenden Gasdiffusionsschicht (3, 4) vorhanden ist, und zwar zumindest in diesem Teilbereich der Gasdiffusionsschicht (3, 4) die Gasdurchlässigkeit näher an der Stromableiterplatte (1) um soviel geringer ist als in der Nähe der Membran (6), daß eine über die Oberfläche der Membran (6) näherungsweise konstante Gaszusammensetzung auftritt und das dampfförmig entstandene Wasser bei der Betriebstemperatur durch die Gasdiffusionsschicht hindurch einen solchen Wasserdampfdiffusionsstrom erzeugt, daß der für die Leitfähigkeit optimale Feuchtigkeitsgehalt der Membran im wesentlichen erhalten bleibt.

2. Brennstoffzelle nach Anspruch 1, **dadurch gekennzeichnet, daß** die elektrisch leiffähige Gasdiffusionsschicht (3, 4) aus einer Mehrzahl von dickenmäßig aufeinanderfolgenden Teilschichten (3; 4) besteht, deren spezifische Gasdurchlässigkeit zur Membranseite hin von Teilschicht zu Teilschicht zunimmt.

3. Brennstoffzelle nach Anspruch 1 oder 2, **dadurch gekennzeichnet, daß** die elektrisch leitfähige Gasdiffusionsschicht (3, 4) in den Bereichen mit der höheren Gasdurchlässigkeit eine höhere Porenvolumendichte hat als in den Bereichen mit der niedrigen Gasdurchlässigkeit.

4. Brennstoffzelle nach einem der Ansprüche 1 bis 3, **dadurch gekennzeichnet, daß** die Gasdiffusionsschicht (3, 4) auch in einer Richtung parallel zur Membran (6) einen Gradienten der Gasdurchfässigkeit hat.

5. Verfahren zur Herstellung einer Polymerelektrolytmembran-Brennstoffzelle nach einem der Ansprüche 1 bis 4, mit einer unter Zwischenlage einer einen Katalysator enthaltenden Elektrode (5) an einer solchen Membran anliegenden porösen, elektrisch leitfähigen Gasdiffusionsschicht (3, 4), wobei man diese Gasdiffusionsschicht (3, 4) mit einem Gradienten der Gasdurchlässigkeit in Richtung ihrer Dicke herstellt, **dadurch gekennzeichnet, daß** man die Gasdiffusionsschicht (3, 4) mit in Richtung auf die Membran (6) zu zunehmender Gasdurchlässigkeit herstellt.

6. Verfahren nach Anspruch 5, **dadurch gekennzeichnet, daß** man die Gasdiffusionsschicht als wenigstens zwei Teilschichten (3, 4) unterschiedlicher Gasdurchlässigkeit erzeugt und in der Brennstoffzelle die Teilschicht(en) mit der höheren Gasdurchlässigkeit bei der Membran anordnet.

7. Verfahren nach Anspruch 6, **dadurch gekennzeichnet, daß** man die unterschiedliche Gasdurchlässigkeit durch die Herstellung unterschiedlicher Porenvolumendichte erzeugt.

8. Verfahren nach einem der Ansprüche 5 bis 7, **dadurch gekennzeichnet, daß** man die Gasdiffusionsschicht aus porösem Kohlefaserpapier herstellt und zur Erzielung der unterschiedlichen Gasdurchlässigkeit die Poren des Kohlefaserpapiers nahe einer seiner Oberflächen teilweile mit einem thermoplastischen Kunststoff verschließt, indem man eine Folie unter Druck und erhöhter Temperatur auf diese Oberfläche aufbringt.

9. Verfahren nach einem der Ansprüche 5 bis 7, **dadurch gekennzeichnet, daß** man die Poren der porösen Gasdiffusionsschicht zur Erzielung der unterschiedlichen Gasdurchlässigkeit, ausgehend von einem Schichtmaterial mit gleichmäßiger Gasdurchlässigkeit, zu einem Teil mit einer Suspension aus Kunststoffpartikeln verschließt.

10. Verfahren nach Anspruch 9, **dadurch gekennzeichnet, daß** man die Gasdiffusionsschicht aus porösem Kohlefaserpapier herstellt und die Suspension durch Tränken und Trocknen in das Kohlefaserpapier einbringt.

11. Verfahren nach einem der Ansprüche 5 bis 7, **dadurch gekennzeichnet, daß** man zur Erzielung der unterschiedlichen Gasdurchlässigkeit, ausgehend von einem Schichtmaterial mit gleichmäßiger Gasdurchlässigkeit, an einer der Oberflächen der Gasdiffusionsschicht eine weitere Schicht aus elektrisch leitfähigen Partikeln und Binderpartikeln aufbringt.

12. Verfahren nach Anspruch 11, **dadurch gekennzeichnet, daß** man die weitere Schicht aufbringt, indem man die leitfähigen Partikel, die vorzugsweise aus Kohlenstoff bestehen, und die Binderpartikel, die vorzugsweise aus fluoriertem Kunststoff bestehen, in einer Suspension aufschwemmt und diese Suspension auf die betreffende Oberfläche der Gasdiffusionsschicht sprüht, die Schicht anschließend trocknet und sie gegebenenfalls sintert.

## Claims

1. A polymer-electrolyte membrane fuel cell comprising a laminate of such membrane (6), an electrode (5) containing a catalyst, a porous, electrically conductive gas diffusion layer (3, 4) and a current collector plate (1) having a gas distribution channel structure (2), the cell having a gradient of the gas permeability determined by the porosity, which gradient is present at least in a partial area, in the laminate in the direction perpendicular to the membrane, with a higher gas permeability closer to the membrane (6) and a lower gas permeability closer to the current collector plate (1), wherein in operation at the membrane by a hydrogen-oxygen reaction water and heat are produced, **characterized in that** the gas permeability gradient exists in the gas diffusion layer (3, 4) which is adjacent to the electrode (5) containing the catalyst, and that at least in said partial area of the gas diffusion layer (3, 4) the gas permeability closer to the current collector plate (1) is lower than that in the vicinity of the membrane (6) to such a degree that a gas composition occurs which over the surface of the membrane (6) is approximately constant, and the water which is generated in form of vapor at the operating temperature creates such a water vapor diffusion stream through the gas diffusion layer that a humidity content of the membrane is materially being maintained, which is optimal for the conductivity.

2. Fuel cell according to claim 1, **characterized in that** the electrically conductive gas diffusion layer (3, 4) consists of a plurality of partial layers (3; 4) following each other along the thickness, the specific gas permeabilities of these partial layers increasing towards the side of the membrane from one partial layer to the next.

3. Fuel cell according to claim 1 or 2, **characterized in that** the electrically conductive gas diffusion layer (3, 4) has a pore volume density higher in the zones with the higher gas permeability than in the zones with the low gas permeability.

4. Fuel cell according to any of claims 1 to 3, **characterized in that** the gas diffusion layer (3, 4) has a gas permeability gradient also in a direction parallel to the membrane (6).

5. Method for producing a polymer electrolyte membrane fuel cell according to any of claims 1 to 4, the cell comprising a porous, electrically conductive gas diffusion layer (3, 4) which is arranged along a membrane with an electrode (5) containing a catalyst being arranged inbetween, the method comprising producing that gas diffusion layer (3, 4) with a gas permeability gradient in the direction of its thickness, **characterized in that** the gas diffusion layer (3, 4) is produced with a gas permeability increasing in the direction toward the membrane (6).

6. Method according to claim 5, **characterized in that** the gas diffusion layer is produced in the form of at least two partial layers (3, 4) with different gas permeabilities, and that in the fuel cell the partial layer or layers having the higher gas permeability are located at the membrane.

7. Method according to claim 6, **characterized in that** the different gas permeabilities are obtained by producing different pore volume densities.

8. Method according to any of claims 5 to 7, **characterized in that** the gas diffusion layer is produced of porous carbon fibre paper and that for obtaining the different gas permeabilities, the pores of the carbon fibre paper near one of its surfaces is partially closed by a thermoplastic synthetic material by putting onto this surface a foil while exerting pressure and elevated temperature.

9. Method according to any of claims 5 to 7, **characterized in that** for obtaining the different gas permeabilities, starting out from a layer material having uniform gas permeability, the pores of the porous gas diffusion layer are partially closed with a suspension of plastic particles.

10. Method according to claim 9, **characterized in that** the gas diffusion layer is produced of porous carbon fibre paper and the suspension is introduced into the carbon fibre paper by drenching and drying.

11. Method according to any of claims 5 to 7, **characterized in that** for obtaining the non-uniform gas permeabilities, starting out from a layer material having uniform gas permeability, at one of the surfaces of the gas diffusion layer a further layer of electrically conductive particles and binder particles are deposited.

12. Method according to claim 11, **characterized in that** the further layer is deposited by suspending the conductive particles which preferably consist of carbon and the binder particles which preferably consist of fluorinated synthetic material in a suspension and spraying this suspension on the respective surface of the gas diffusion layer, then drying and possibly sintering the layer.

## Revendications

1. Pile à combustible à membrane de polymère électrolytique comportant un empilage formé d'une telle membrane (6), d'une électrode (5) contenant un catalyseur, d'une couche de diffusion de gaz (3, 4) poreuse, conductrice électrique et d'une plaque de sortie de courant (1) ayant une structure de canal de répartition de gaz (2), ainsi qu'ayant au moins un gradient dans une zone partielle de perméabilité au gaz assurée par la porosité, dans la couche, dans la direction perpendiculaire à la membrane, avec une perméabilité au gaz plus élevée à proximité de la membrane (6) et une perméabilité au gaz plus faible à proximité de la plaque de sortie de courant (1), avec une réaction d'hydrogène et d'oxygène sur la membrane pendant le fonctionnement produisant de l'eau et de la chaleur,
**caractérisée en ce que**
le gradient de perméabilité au gaz se trouve dans la couche de diffusion de gaz (3, 4) adjacente à l'électrode (5) contenant le catalyseur, et
au moins dans cette zone partielle de la couche de diffusion de gaz (3, 4), la perméabilité au gaz, plus faible au niveau de la plaque de sortie de courant (1) qu'à proximité de la membrane (6), est réduite de sorte que l'on a une composition de gaz pratiquement constante à la surface de la membrane (6), et l'eau dégagée sous forme de vapeur à la température de fonctionnement, crée à travers la couche de diffusion un courant de diffusion de vapeur d'eau tel qu'il maintient essentiellement constante l'humidité de la membrane optimale pour la conductivité.

2. Pile à combustible selon la revendication 1,
**caractérisée en ce que**
la couche de diffusion de gaz (3, 4) conductrice électrique se compose de plusieurs couches partielles (3; 4) qui se suivent dans le sens de l'épaisseur et dont la perméabilité spécifique au gaz pour le côté de la membrane augmente d'une couche partielle à l'autre.

3. Pile à combustible selon la revendication 1 ou 2,
**caractérisée en ce que**
la couche de diffusion de gaz (3, 4) conductrice électrique présente dans les zones à forte perméabilité au gaz, une densité de volume de pores plus élevée que dans les zones à faible perméabilité au gaz.

4. Pile à combustible selon l'une quelconque des revendications 1 à 3,
**caractérisée en ce que**
la couche de diffusion de gaz (3, 4) a un gradient de perméabilité au gaz également dans une direction parallèle à la membrane (6).

5. Procédé de fabrication d'une pile à combustible à membrane de polymère électrolytique selon l'une quelconque des revendications 1 à 4, comprenant une couche de diffusion de gaz (3, 4) conductrice électrique, poreuse, appliquée contre la membrane avec interposition d'une électrode (5) contenant un catalyseur, cette couche de diffusion de gaz (3, 4) étant fabriquée avec un gradient de perméabilité au gaz dans la direction de son épaisseur,
**caractérisé en ce qu'**
on réalise la couche de diffusion de gaz (3, 4) avec une perméabilité au gaz croissante en direction de la membrane (6).

6. Procédé selon la revendication 5,
**caractérisé en ce qu'**
on réalise la couche de diffusion de gaz sous la forme d'au moins deux couches partielles (3,4) à perméabilité au gaz différente, et dans la pile à combustible on installe la ou les couches partielles de plus forte perméabilité au gaz au niveau de la membrane.

7. Procédé selon la revendication 6,
**caractérisé en ce que**
la perméabilité au gaz différente est réalisée par des densités de volume de pores différentes.

8. Procédé selon l'une quelconque des revendications 5 à 7,
**caractérisé en ce que**
la couche de diffusion de gaz est en papier de fibres de carbone poreux, et pour réaliser la perméabilité au gaz différente, on ferme les pores du papier à fibres de carbone à proximité de l'une des faces en partie avec une matière thermoplastique, en appliquant un film sous pression et à température élevée sur cette surface.

9. Procédé selon l'une quelconque des revendications 5 à 7,
**caractérisé en ce que**
pour réaliser des perméabilités au gaz différentes, partant d'une matière en couches à perméabilité régulière au gaz, on ferme une partie des pores de la couche poreuse de diffusion gazeuse avec une suspension de particules de matière plastique.

10. Procédé selon la revendication 9,
**caractérisé en ce qu'**
on fabrique la couche de diffusion de gaz en papier de carbone poreux et on introduit la suspension dans le papier de fibres de carbone par imprégnation et séchage.

11. Procédé selon l'une quelconque des revendications 5 à 7,
**caractérisé en ce que**
pour réaliser la perméabilité au gaz différente, partant d'une matière en couches à perméabilité au gaz, régulière, on applique sur l'une des faces de la couche de diffusion de gaz, une autre couche en particules conductrices électriques et en particules de liant.

12. Procédé selon la revendication 11,
**caractérisé en ce qu'**
on applique l'autre couche en mettant en suspension les particules conductrices, de préférence en carbone et les particules de liant, de préférence en matière plastique fluorée, et en pulvérisant cette suspension sur la surface concernée de la couche de diffusion de gaz, en séchant ensuite cette couche et le cas échéant en la frittant.
